# EUROPEAN PATENT APPLICATION

(11) **EP 4 625 631 A1**
(43) Date of publication of application: **01.10.2025**
(21) Application number: 24202936.1
(22) Date of filing: 26.09.2024
(51) Int. Cl.: H01M 50/152, H01M 50/528, H01M 50/533, H01M 50/536, H01M 50/548

(54) **CURRENT COLLECTION PLATE, COVER PLATE ASSEMBLY, BATTERY CELL, BATTERY ASSEMBLY, AND POWER-CONSUMING DEVICE**

(30) Priority: 27.03.2024 CN 202420621670 U
(71) Applicant: BYD Company Limited, Shenzhen, Guangdong 518118 (CN)
(72) Inventor: Liu, Yanchu, Shenzhen, 518118 (CN); Chen, Jiankang, Shenzhen, 518118 (CN); Guo, Xin, Shenzhen, 518118 (CN); Ma, Zhiying, Shenzhen, 518118 (CN); Wang, Yadong, Shenzhen, 518118 (CN)
(74) Representative: Mathys & Squire

(57) **Abstract**

The present disclosure discloses a current collection plate, a cover plate assembly, a battery cell, a battery assembly, and a power-consuming device. The current collection plate includes a first joint portion. The first joint portion includes a connection region adapted to be electrically connected to an electrode core, and a width of the connection region increases from inside to outside in a direction away from a geometric center of the current collection plate. According to the current collection plate in embodiments of the present disclosure, a connection region between the current collection plate and the electrode core is large close to an edge, thereby ensuring connection strength between the current collection plate and the electrode core, and connection impedance can be further reduced, to help improve working performance of the battery cell.

## Description

### FIELD

The present disclosure relates to the field of battery technologies, and in particular, to a current collection plate, a cover plate assembly, a battery cell, a battery assembly, and a power-consuming device.

### BACKGROUND

In the related art, to implement electrical connection between a cover plate and an electrode core, a current collection plate is usually arranged between the cover plate and the electrode core.

However, when the current collection plate is connected to the electrode core, a welding area between the current collection plate and an outer electrode plate of the electrode core is small. As a result, connection strength between the current collection plate and the electrode core is decreased, and impedance is increased, which affects working performance of a battery cell.

### SUMMARY

The present disclosure is intended to resolve at least one of the technical problems existing in the related art. Therefore, a first objective of the present disclosure is to provide a current collection plate. The current collection plate can ensure a connection area between the current collection plate and an outer electrode plate of an electrode core, improve connection strength between the current collection plate and the electrode core, and reduce connection impedance, to solve the technical problems in the related art that the connection area between the current collection plate and the electrode core is small, the connection strength is low, and the connection impedance is high.

A second objective of the present disclosure is to provide a cover plate assembly having the foregoing current collection plate.

A third object of the present disclosure is to provide a battery cell having the foregoing cover plate assembly.

A fourth object of the present disclosure is to provide a battery assembly having the foregoing battery cell.

A fifth object of the present disclosure is to provide a power-consuming device having the foregoing battery assembly.

The current collection plate according to an embodiment of the present disclosure includes: a first joint portion, the first joint portion including a connection region adapted to be electrically connected to an electrode core, and a width of the connection region increasing from inside to outside in a direction away from a geometric center of the current collection plate.

According to the current collection plate in this embodiment of the present disclosure, the connection region is arranged on the first joint portion, and in the direction away from the geometric center of the current collection plate, the width of the connection region is set to increase from inside to outside. In this way, while the current collection plate is used to electrically connect a cover plate to the electrode core, to ensure working performance of a battery cell, the connection region and an outer electrode plate of the electrode core in the direction away from the geometric center of the current collection plate can also have a large connection area, thereby ensuring a connection area between the current collection plate and the outer electrode plate of the electrode core, improving connection strength between the current collection plate and the electrode core, and reducing connection impedance, to improve the working performance of the battery cell.

In some embodiments, the connection region has a maximum width close to an edge of the current collection plate and a minimum width close to the geometric center of the current collection plate, and a difference between the minimum width and the maximum width is in a value range of 2 mm to 6 mm.

In some embodiments, the minimum width is in a value range of 1 mm to 10 mm.

In some embodiments, the first joint portion includes a plurality of connection regions, and the plurality of connection regions are arranged at intervals in a circumferential direction of the current collection plate.

In some embodiments, two connection regions are provided and are arranged symmetrically relative to the geometric center of the current collection plate.

In some embodiments, a part of the current collection plate is bent to define the connection region.

In some embodiments, the current collection plate further includes a second joint portion and an intermediate piece. The second joint portion is adapted to be electrically connected to a cover plate, two ends of the intermediate piece are connected to the first joint portion and the second joint portion respectively, and in a thickness direction of the current collection plate, the first joint portion, the intermediate piece, and the second joint portion are stacked.

In some embodiments, the first joint portion further includes an identification region, and the identification region is arranged close to a junction of the intermediate piece and the first joint portion.

In some embodiments, in a first direction, a connection line between junctions of opposite side walls of the intermediate piece and the first joint portion is a first connection line, and a minimum distance between the identification region and the first connection line is in a value range of -2 mm to +2 mm; and/or, in the first direction, a maximum width of the identification region is D3, and a minimum width of the intermediate piece is D4, where 0.2 < D3/D4 < 1.

In some embodiments, the identification region is a through hole penetrating the first j oint portion or a groove provided in the first j oint portion.

In some embodiments, the current collection plate includes a plate body, portions the plate body protruding toward the electrode core to form, on the plate body, the first j oint portion protruding toward the electrode core and the second joint portion protruding toward a cover plate.

In some embodiments, a thickness of the second joint portion is greater than a thickness of the first joint portion.

In some embodiments, a thickness of the first joint portion is L1, and a thickness of the plate body excluding the first joint portion is L2, where 0 mm < L2-L1 < 0.5 mm.

The cover plate assembly for a battery cell according to an embodiment of the present disclosure includes: a cover plate, the cover plate including a current lead-out terminal; and a current collection plate. The current collection plate is the foregoing current collection plate, and the current collection plate is electrically connected to the cover plate.

According to the cover plate assembly in this embodiment of the present disclosure, by using the foregoing current collection plate, a connection area between the cover plate and the electrode core can be increased, connection strength can be improved, and connection impedance can be reduced, to improve working performance of the battery cell.

In some embodiments, the cover plate is provided with an electrolyte solution filling hole, and the first joint portion further includes an avoidance opening for avoiding the electrolyte solution filling hole.

In some embodiments, a minimum spacing between the avoidance opening and the electrolyte solution filling hole is in a value range of 0 mm to 10 mm.

The battery cell according to an embodiment of the present disclosure includes: a housing, an accommodating cavity with an opening being formed in the housing; an electrode core, the electrode core being provided with a tab, and the electrode core being arranged in the accommodating cavity; and a cover plate assembly. The cover plate assembly is the foregoing cover plate assembly, the cover plate is arranged at the opening, the current collection plate is arranged between the tab and the cover plate, and the current collection plate is electrically connected to the tab and the cover plate separately.

According to the battery cell in this embodiment of the present disclosure, by using the foregoing cover plate assembly, electrical connection between the cover plate and the electrode core is implemented by using the foregoing current collection plate, to increase the connection area between the cover plate and the electrode core, thereby improving the connection strength between the cover plate and the electrode core, reducing the connection impedance, and improving the working performance of the battery cell.

In some embodiments, the connection region is welded to the tab, and a welding line is provided at the connection region.

In some embodiments, in a width direction of the connection region, a plurality of rows of welding lines are provided in the connection region, each row of welding line includes a plurality of welding spots, and welding spots in adjacent rows are arranged alternately.

In some embodiments, a quantity of welding lines close to an edge of the current collection plate is greater than a quantity of welding lines close to a geometric center of the current collection plate.

In some embodiments, the battery cell is a cylindrical cell.

The battery assembly according to an embodiment of the present disclosure includes a plurality of battery cells described above.

According to the battery assembly in this embodiment of the present disclosure, by using the foregoing battery cell, working performance of the battery assembly is improved.

The power-consuming device according to an embodiment of the present disclosure includes the foregoing battery assembly.

According to the power-consuming device according to this embodiment of the present disclosure, by using the foregoing battery assembly, working performance of the power-consuming device is improved.

The additional aspects and advantages of the present disclosure will become apparent from the description below, or will be understood by the practice of the present disclosure.

### BRIEF DESCRIPTION OF THE DRAWINGS

The foregoing and/or additional aspects and advantages of the disclosure will become apparent and comprehensible in the description of the embodiments made with reference to the following accompanying drawings.
FIG. 1 is a schematic diagram of an unfolded current collection plate according to some embodiments of a first aspect of the present disclosure.
FIG. 2 is a schematic diagram of a current collection plate according to some embodiments of a second aspect of the present disclosure.
FIG. 3 is a schematic diagram of a cover plate assembly according to some embodiments of a first aspect of the present disclosure, where the current collection plate is in an unfolded state.
FIG. 4 is a schematic diagram of a cover plate assembly according to some embodiments of a third aspect of the present disclosure, where the current collection plate is in an unfolded state.
FIG. 5 is a schematic diagram of a cover plate assembly according to some embodiments of a first aspect of the present disclosure from another perspective, where the current collection plate is in a folded state.
FIG. 6 is a schematic diagram of a cover plate assembly according to some embodiments of a first aspect of the present disclosure from another perspective, where the current collection plate is in a folded state.
FIG. 7 is a front view of a battery cell according to some embodiments of the disclosure.
FIG. 8 is a schematic diagram of a battery cell according to some embodiments of the disclosure.
FIG. 9 is an exploded view of a battery cell according to some embodiments of the disclosure.

In the drawings:
1000. Battery cell;
100. Current collection plate;
110. Second joint portion;
120. First joint portion;
121. Connection region;
1211. Opposite side walls;
1212. Welding line; 1213. Welding spot;
122. Identification region;
123. Avoidance opening;
130. Intermediate piece; 140. Plate body;
200. Cover plate assembly;
210. Cover plate; 211. Electrolyte solution filling hole;
220. Sealing screw; 230. Sealing cover; 240. Boss; 250. Terminal;
300. Housing;
310. Accommodating cavity; 311. Opening;
320. Electrode core.

### DETAILED DESCRIPTION

Reference will be made in detail to embodiments of the present disclosure. The embodiments described herein with reference to drawings are explanatory, illustrative, and should be used to generally understand the present disclosure. The embodiments that are described with reference to the accompany drawings are exemplary, and are only used to interpret the present disclosure, instead limiting the present disclosure.

In the description of the present disclosure, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing the present disclosure and simplifying the description, rather than indicating or implying that the device or element should have a particular orientation or be constructed and operated in a particular orientation, and therefore, should not be construed as a limitation on the present disclosure.

The following describes a current collection plate 100 according to an embodiment of the present disclosure with reference to the accompanying drawings of the specification.

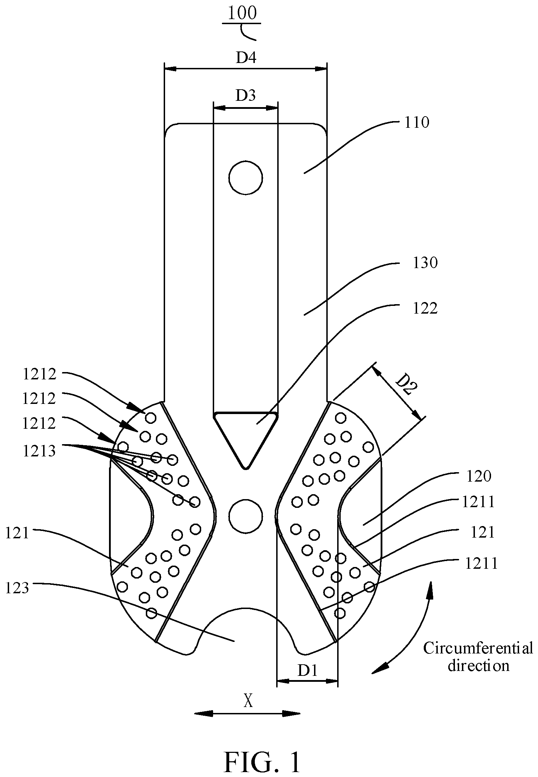

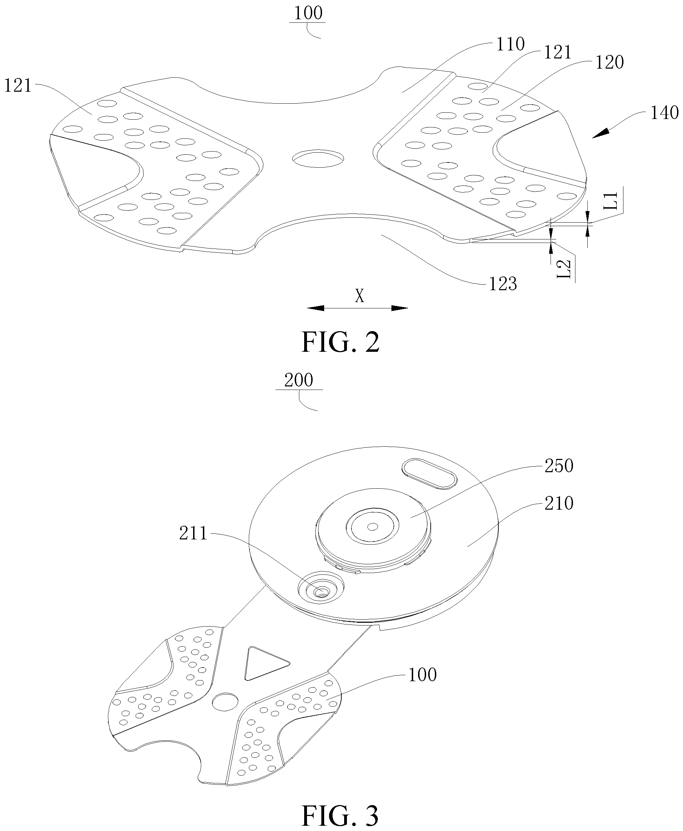

As shown in FIG. 1 and FIG. 2, a current collection plate 100 according to an embodiment of the present disclosure includes: a first joint portion 120.

As shown in FIG. 1 and FIG. 2, the first joint portion 120 includes a connection region 121 adapted to be electrically connected to an electrode core 320, and a width of the connection region 121 increases from inside to outside in a direction away from a geometric center of the current collection plate 100.

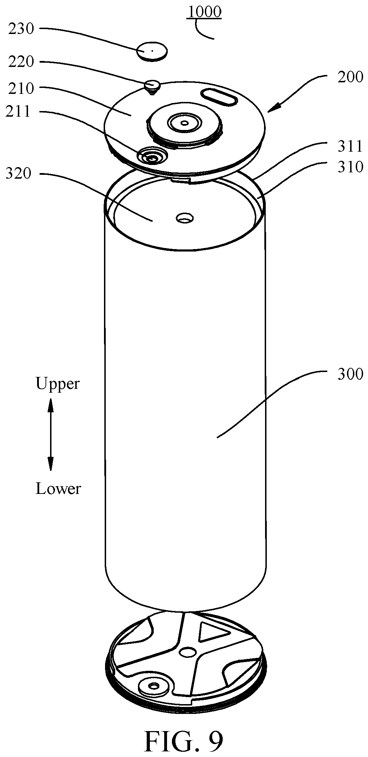

By arranging the connection region 121 that is electrically connected to the electrode core 320 on the first joint portion 120, the electrical connection between the first joint portion 120 and the electrode core 320 can be implemented, that is, the electrical connection between the current collection plate 100 and the electrode core 320 can be implemented. For a specific structure of the electrode core 320, reference may be made to FIG. 9.

It should be noted that the geometric center of the current collection plate 100 may be understood as a position close to a radial middle of the current collection plate 100, the width of the connection region 121 may be understood as a distance between two opposite side walls of the connection region 121 in a circumferential direction of the current collection plate 100, and that the width of the connection region 121 increases from inside to outside means that a width of a part of the connection region 121 close to an edge of the current collection plate 100 is greater than a width of a part of the connection region 121 close to the geometric center of the current collection plate 100. In the related art, especially for a cylindrical electrode core, as the diameter of the electrode core 320 increases, the perimeter of an outer electrode plate of the electrode core 320 close to the edge of the current collection plate 100 also correspondingly increases. When the width of the part of the connection region 121 close to the edge of the current collection plate 100 is set to be the same as the width of the part of the connection region 121 close to the geometric center of the current collection plate 100, the connection area between the outer electrode plate of the electrode core 320 and the current collection plate 100 is small, resulting in low connection strength and high impedance between the outer electrode plate of the electrode core 320 and the current collection plate 100.

To resolve the foregoing problem, in the present disclosure, in the direction away from the geometric center of the current collection plate 100, the width of the connection region 121 is set to increase from inside to outside, to set the width of the part of the connection region 121 close to the edge of the current collection plate 100 to be greater than the width of the part of the connection region 121 close to the geometric center of the current collection plate 100, which can resolve, to some extent, the technical problem that the connection area between the outer electrode plate and the current collection plate 100 is small, thereby improving the connection strength between the current collection plate 100 and the electrode core 320, and reducing the connection impedance.

In other words, in the present disclosure, the width of the connection region 121 is adaptively adjusted according to a position of the connection region 121 on the current collection plate 100, so that the connection region 121 has characteristics of a small width close to the geometric center of the current collection plate 100 and a large width close to the edge of the current collection plate 100, to effectively resolve the technical problem in the related art that the connection area between the current collection plate 100 and the outer electrode plate of the electrode core 320 is small.

It can be learned from the foregoing structure that, according to the current collection plate 100 in this embodiment of the present disclosure, by setting, in the direction away from the geometric center of the current collection plate 100, the width of the connection region 121 to increase from inside to outside, the width of the part of the connection region 121 close to the edge of the current collection plate 100 can be greater than the width of the part of the connection region 121 close to the geometric center of the current collection plate 100, so that the width of the part of the connection region 121 close to the edge of the current collection plate 100 is large. In this way, while a connection area between the connection region 121 and an inner electrode plate of the electrode core 320 is ensured, the connection area between the connection region 121 and the outer electrode plate of the electrode core 320 can also be increased, thereby ensuring a connection area between the current collection plate 100 and the outer electrode plate of the electrode core 320, improving connection strength between the current collection plate 100 and the electrode core 320, and reducing connection impedance, to improve working performance of a battery cell 1000.

It may be understood that, compared with the related art, in the present disclosure, the width of the part of the connection region 121 close to the edge of the current collection plate 100 is set to be greater than the width of the part of the connection region 121 close to the geometric center of the current collection plate 100, to increase the connection area between the connection region 121 and the outer electrode plate of the electrode core 320, thereby ensuring the connection area between the current collection plate 100 and the outer electrode plate of the electrode core 320, improving the connection strength between the current collection plate 100 and the electrode core 320, and reducing the connection impedance.

In the description of the present disclosure, a feature defined to be "first" or "second" may explicitly or implicitly include one or more features, and is used for distinguishing description features without order differences and without importance differences.

In some embodiments, as shown in FIG. 1 and FIG. 2, in the direction away from the geometric center of the current collection plate 100, the width of the connection region 121 gradually increases from inside to outside, so that the connection region 121 is formed into a shape similar to "a mouth of a horn", thereby making the width of the part of the connection region 121 close to the edge of the current collection plate 100 greater than the width of the part of the connection region 121 close to the geometric center of the current collection plate 100, to increase the connection area between the connection region 121 and the outer electrode plate of the electrode core 320.

In some embodiments, a pit may be stamped out on the first joint portion 120 to form the connection region 121 on the first joint portion 120, and the connection region 121 is formed through stamping, thereby reducing the difficulty of forming the connection region 121 and ensuring the structural strength of the connection region 121, and facilitating the electrical connection between the first joint portion 120 and the electrode core 320.

In some embodiments, the pit is protruding toward the electrode core 320, so that the connection region 121 is protruding toward the electrode core 320, which facilitates electrical connection between the connection region 121 and the electrode core 320 and can ensure a connection yield between the connection region 121 and the electrode core 320.

In some embodiments, the connection region 121 is welded to the electrode core 320. In this way, while electrical connection can be formed between the connection region 121 and the electrode core 320, connection strength between the connection region 121 and the electrode core 320 can be ensured, difficulty of connection between the connection region 121 and the electrode core 320 is reduced, and assembly efficiency and structural stability of the battery cell 1000 are improved.

In some embodiments, the current collection plate 100 includes a positive current collection plate and a negative current collection plate. The positive current collection plate is electrically connected to a positive tab of the electrode core 320, and the negative current collection plate is electrically connected to a negative tab of the electrode core 320, to ensure the working performance of the electrode core 320.

A material of the positive current collection plate is aluminum, and a material of the negative current collection plate is copper.

Certainly, in some other embodiments, the material of the negative current collection plate is not limited to copper, or may be steel. When the battery cell 1000 is a sodium cell, the material of the negative current collection plate may alternatively be aluminum. This is not specifically limited herein.

In some embodiments, as shown in FIG. 1 and FIG. 2, the connection region 121 includes two opposite side walls 1211 spaced away, a distance between the two opposite side walls 1211 is the width of the connection region 121, and the width of the part of the connection region 121 close to the edge of the current collection plate 100 is greater than the width of the part of the connection region 121 close to the geometric center of the current collection plate 100, so that the width of the connection region 121 increases from inside to outside in the direction away from the geometric center of the current collection plate 100, to increase the connection area between the connection region 121 and the outer electrode plate of the electrode core 320, thereby ensuring the connection area between the current collection plate 100 and the outer electrode plate of the electrode core 320, improving the connection strength between the current collection plate 100 and the electrode core 320, and reducing the connection impedance, to improve the working performance of the battery cell 1000.

In some embodiments, the connection region 121 has a maximum width close to an edge of the current collection plate 100 and a minimum width close to the geometric center of the current collection plate 100, and a difference between the minimum width and the maximum width is in a value range of 2 mm to 6 mm. In other words, the connection region 121 is formed with the maximum width close to the edge of the current collection plate 100, and the connection region 121 is formed with the minimum width close to the geometric center of the current collection plate 100. The minimum width of the connection region 121 described herein may be understood as D1 shown in FIG. 1, and the maximum width of the connection region 121 may be understood as D2 shown in FIG. 1. When the difference between the minimum width of the connection region 121 and the maximum width of the connection region 121 is in a value range of less than 2 mm, the connection area between the connection region 121 and the outer electrode plate of the electrode core 320 cannot be effectively increased on the premise that the minimum width of the connection region 121 is specific. When the difference between the minimum width of the connection region 121 and the maximum width of the connection region 121 is in a value range of greater than 6 mm, the maximum width of the connection region 121 is large on the premise that the minimum width of the connection region 121 is specific. The connection area between the second joint portion 110 and the first joint portion 120 is reduced when the current collection plate 100 is formed into the current collection plate 100 in FIG. 1, and the area of the second joint portion 110 is reduced when the current collection plate 100 is formed into the current collection plate 100 in FIG. 2. Therefore, the connection strength between the current collection plate 100 and the cover plate 210 is reduced. On the premise that the maximum width of the connection region 121 is specific, the minimum width of the connection region 121 is small, affecting the connection area between the connection region 121 and the inner electrode plate of the electrode core 320.

Therefore, in the present disclosure, the difference between the minimum width of the connection region 121 and the maximum width of the connection region 121 is set to be in a value range of 2 mm to 6 mm. In this way, while the connection area between the connection region 121 and the outer electrode plate of the electrode core 320 is ensured, the connection area between the connection region 121 and the inner electrode plate of the electrode core 320 can also be ensured, thereby ensuring the connection area between the current collection plate 100 and the electrode core 320, improving connection strength between the current collection plate 100 and the electrode core 320, and further reducing connection impedance.

In a specific example, the difference between the minimum width of the connection region 121 and the maximum width of the connection region 121 is 2 mm, 3 mm, 4 mm, 5 mm, 6 mm, or the like.

In some embodiments, the minimum width is in a value range of 1 mm to 10 mm. In other words, D1 is in a value range of 1 mm to 10 mm. When D1 < 1 mm, the difficulty of forming the connection region 121 is increased, and the connection area between the connection region 121 and the inner electrode plate of the electrode core 320 can be further reduced. When D1 > 10 mm, because the difference between the minimum width of the connection region 121 and the maximum width of the connection region 121 is in the value range of 2 mm to 6 mm, the maximum width D2 of the connection region 121 is large. In this way, the connection area between the second joint portion 110 and the first joint portion 120 is reduced when the current collection plate 100 is formed into the current collection plate 100 in FIG. 1, and the area of the second joint portion 110 is reduced when the current collection plate 100 is formed into the current collection plate 100 in FIG. 2. Therefore, the connection strength between the current collection plate 100 and the cover plate 210 is reduced.

Therefore, in the present disclosure, the minimum width of the connection region 121 is set to be in the value range of 1 mm to 10 mm, so that while the difficulty of forming the connection region 121 is reduced and the connection area between the connection region 121 and the inner electrode plate of the electrode core 320 is increased, the connection area between the second joint portion 110 and the first joint portion 120 can be further ensured and the connection strength between the current collection plate 100 and the cover plate 210 can be further improved, thereby ensuring the working performance of the battery cell 1000.

In a specific example, the minimum width of the connection region 121 is 1 mm, 2 mm, 3 mm, 4 mm, 5 mm, 6 mm, 7 mm, 8 mm, 9 mm, or 10 mm.

In some embodiments, as shown in FIG. 1 and FIG. 2, the first joint portion 120 includes a plurality of connection regions 121, and the plurality of connection regions 121 are arranged at intervals in a circumferential direction of the current collection plate 100, to increase the connection area between the first joint portion 120 and the electrode core 320, thereby improving the connection strength between the first joint portion 120 and the electrode core 320, and ensure an overcurrent capability of the current collection plate 100, thereby reducing impedance.

In the description of the present disclosure, unless otherwise stated, "a plurality of" means two or more than two.

In some embodiments, as shown in FIG. 1 and FIG. 2, two connection regions 121 are provided and are arranged symmetrically relative to the geometric center of the current collection plate 100. In this way, while the connection area between the first joint portion 120 and the electrode core 320 is ensured, the structure of the current collection plate 100 can be further simplified, difficulty of manufacturing the current collection plate 100 is reduced, and connection points between the current collection plate 100 and the electrode core 320 are evenly distributed on the electrode core 320.

In some embodiments, a part of the current collection plate 100 is bent to define the connection region 121. The difficulty of forming the connection region 121 is reduced, and the connection strength between the connection region 121 and the current collection plate 100 can be ensured, so that the position of the connection region 121 is stable, thereby ensuring the working performance of the connection region 121, and ensuring that the electrical connection between the first joint portion 120 and the electrode core 320 can be effectively implemented by using the connection region 121.

In a specific example, a part of the current collection plate 100 may be stamped to define the connection region 121, so that the connection region 121 is formed through stamping, thereby reducing the difficulty of forming the connection region 121.

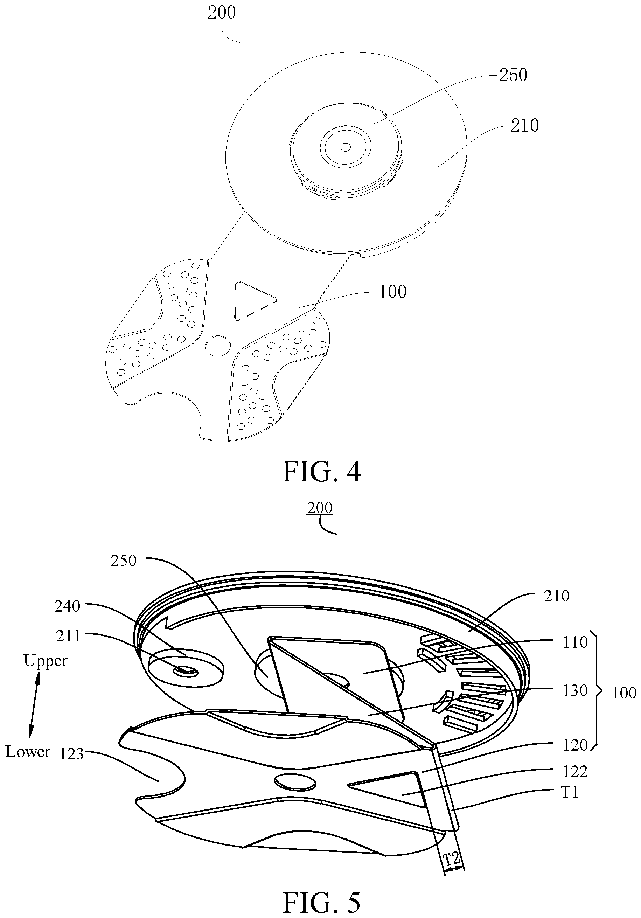

In some embodiments, with reference to FIG. 1 and FIG. 5, the current collection plate 100 further includes a second joint portion 110 and an intermediate piece 130. Two ends of the intermediate piece 130 are connected to the first j oint portion 120 and the second joint portion 110 respectively, and in a thickness direction of the current collection plate 100, the first joint portion 120, the intermediate piece 130, and the second joint portion 110 are stacked. The thickness direction described herein may also be understood as an upper-lower direction shown in FIG. 1. By stacking the first joint portion 120, the intermediate piece 130, and the second joint portion 110 in the thickness direction of the current collection plate 100, two structural pieces (for example, the cover plate 210 and the electrode core 320) arranged in the upper-lower direction can be connected conveniently by the current collection plate 100, thereby reducing the difficulty of connection between the cover plate 210 and the electrode core 320 spaced away in the upper-lower direction.

In addition, by stacking the first joint portion 120, the intermediate piece 130, and the second joint portion 110 in the thickness direction of the current collection plate 100, a dimension in the thickness direction of the current collection plate 100 can also be reduced, thereby reducing a dimension in an axial direction of the battery cell 1000, and reducing assembly difficulty of the battery cell 1000.

In some embodiments, the second joint portion 110 is adapted to be electrically connected to the cover plate 210. Therefore, the electrical connection between the current collection plate 100 and the cover plate 210 is implemented, that is, the electrical connection between the electrode core 320 and the cover plate 210 is implemented, to lead out the current of the electrode core 320 conveniently by using the cover plate 210, thereby ensuring the working performance of the electrode core 320, that is, ensuring the working performance of the battery cell 1000.

It should be noted that the foregoing cover plate 210 may be understood as the cover plate 210 that is located on the cover plate assembly 200 in the battery cell 1000. For a specific structure of the cover plate 210, reference may be made to FIG. 3, FIG. 4, FIG. 5, or FIG. 6, to implement electrical connection between the current collection plate 100 and the cover plate assembly 200.

In some embodiments, the second joint portion 110 is welded to the cover plate 210. In this way, while electrical connection can be formed between the second joint portion 110 and the cover plate 210, connection strength between the second joint portion 110 and the cover plate 210 can be ensured, difficulty of connection between the second joint portion 110 and the cover plate 210 is reduced, and assembly efficiency and structural stability of the battery cell 1000 are improved.

In some embodiments, with reference to FIG. 3, FIG. 4, and FIG. 5, a terminal 250 is arranged on the cover plate 210, the terminal 250 penetrates the cover plate 210, and the second joint portion 110 is adapted to be electrically connected to the terminal 250.

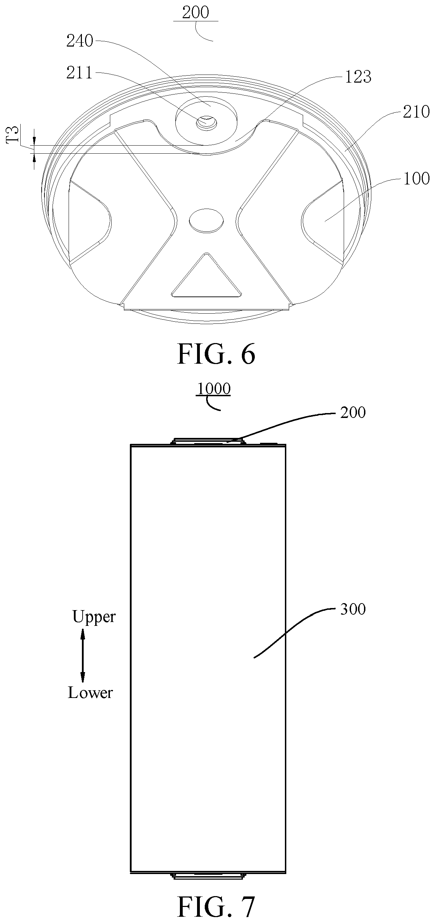

In some embodiments, during machining of the current collection plate 100, the current collection plate 100 is first formed into the shape shown in FIG. 1. After machining of the current collection plate 100 is completed, the current collection plate 100 is folded (as shown in FIG. 5), so that the current collection plate 100 is formed into the shape shown in FIG. 6. In this way, the first joint portion 120, the intermediate piece 130, and the second joint portion 110 of the current collection plate 100 are stacked in the thickness direction of the current collection plate 100, to implement electrical connection between the cover plate 210 and the electrode core 320 conveniently by using the current collection plate 100, reduce the difficulty of connection between the cover plate 210 and the electrode core 320, reduce the occupied space of the current collection plate 100, and reduce the difficulty of forming the current collection plate 100.

In some embodiments, as shown in FIG. 1 and FIG. 5, the first joint portion 120 further includes an identification region 122, and the identification region 122 is arranged close to a junction of the intermediate piece 130 and the first joint portion 120. In other words, the identification region 122 is arranged close to the junction of the intermediate piece 130 and the first joint portion 120. The identification region 122 helps a worker quickly determine the position of the junction of the intermediate piece 130 and the first joint portion 120, thereby helping fold the current collection plate 100 from the shape shown in FIG. 1 into the shape shown in FIG. 5, reducing the difficulty of forming the current collection plate 100, and ensuring the structural accuracy of the formed current collection plate 100, to prevent the junction of the intermediate piece 130 and the first joint portion 120 from being formed on the connection region 121. In this way, the area of the connection region 121 can be further ensured, thereby ensuring the connection area between the current collection plate 100 and the electrode core 320, and improving the operating performance of the battery cell 1000.

In other words, in the present disclosure, by arranging the identification region 122, while the difficulty of forming the current collection plate 100 is reduced, the folding position of the current collection plate 100 can also be limited, and the junction of the intermediate piece 130 and the first joint portion 120 is prevented from being formed on the connection region 121, to ensure the connection area between the connection region 121 and the electrode core 320.

In some embodiments, with reference to FIG. 1 and FIG. 5, the identification region 122 is located between two adjacent connection regions 121, to properly use the space on the current collection plate 100 and ensure that the identification region 122 can be arranged close to the junction of the intermediate piece 130 and the first joint portion 120.

In some embodiments, as shown in FIG. 5, in a first direction, a connection line between junctions of opposite side walls of the intermediate piece 130 and the first joint portion 120 is a first connection line T1, and a minimum distance between the identification region 122 and the first connection line T1 is in a value range of -2 mm to +2 mm. It may also be understood herein that, a connection line between the intermediate piece 130 and the first joint portion 120 is a first connection line T1, and there are a plurality of distances between the identification region 122 and the first connection line T1, and a minimum distance of the plurality of distances ranges from -2 mm to +2 mm. The minimum distance between the identification region 122 and the first connection line T1 may also be understood as T2 shown in FIG. 5.

It should be noted that because the identification region 122 is arranged between two adjacent connection regions 121, when the minimum distance between the identification region 122 and the first connection line T1 is less than -2 mm, the first connection line T1 is formed on the connection region 121, thereby reducing the connection area between the connection region 121 and the electrode core 320; and when the minimum distance between the identification region 122 and the first connection line T1 is greater than 2 mm, the area of the intermediate piece 130 is reduced, to reduce the structural strength of the intermediate piece 130, and further the second joint portion 110, the intermediate piece 130, and the first joint portion 120 cannot be stacked in the thickness direction of the current collection plate 100, to affect the performance of the current collection plate 100.

Therefore, in the present disclosure, the minimum distance between the identification region 122 and the first connection line T1 is set to be in the value range of -2 mm to +2 mm, so that while the connection area between the connection region 121 and the electrode core 320 is ensured, the area of the intermediate piece 130 can also be ensured, and the second joint portion 110, the intermediate piece 130, and the first joint portion 120 can be effectively stacked in the thickness direction of the current collection plate 100, thereby ensuring the performance of the current collection plate 100.

In a specific example, the minimum distance between the identification region 122 and the first connection line T1 is -2 mm, -1 mm, 0 mm, 1 mm, or 2 mm.

Optionally, as shown in FIG. 1, in the first direction, a maximum width of the identification region 122 is D3, and a minimum width of the intermediate piece 130 is D4, where 0.2 < D3/D4 < 1. In other words, the maximum width of the identification region 122 is less than the minimum width of the intermediate piece 130, and a ratio of the maximum width of the identification region 122 to the minimum width of the intermediate piece 130 is greater than 0.2. In this way, while a case that the structural strength of the current collection plate 100 is reduced because the identification region 122 is arranged is avoided, the identification region 122 can be further ensured to have a specific width, thereby reducing the difficulty of forming the current collection plate 100 conveniently by limiting the folding position of the current collection plate 100.

In some embodiments, the ratio of the maximum width of the identification region 122 to the minimum width of the intermediate piece 130 is 0.3, 0.4, 0.5, 0.6, 0.7, 0.8, 0.9, or the like.

In some embodiments, with reference to FIG. 1 and FIG. 5, the identification region 122 is a through hole penetrating the first joint portion 120 or a groove provided in the first joint portion 120. In other words, the identification region 122 may be formed into a through hole penetrating the first joint portion 120, or may be formed into a groove provided on the first joint portion 120, which is not specifically limited herein, as long as it is ensured that a worker can visually observe the position of the identification region 122 and determine the folding position of the current collection plate 100 conveniently by using the identification region 122.

The identification region 122 shown in the figure is triangular in shape. However, in some other embodiments, the identification region 122 may alternatively be rectangular, circular, elliptical, irregular, or the like in shape.

In some embodiments, as shown in FIG. 2, the current collection plate 100 includes a plate body 140, and portions the plate body 140 is protruding toward the electrode core 320 to form, on the plate body 140, the first joint portion 120 protruding toward the electrode core 320 and the second joint portion 110 protruding toward the cover plate 210. In other words, the current collection plate 100 is not limited to being set to include the first joint portion 120, the intermediate piece 130, and the second joint portion 110, and the first joint portion 120, the intermediate piece 130, and the second joint portion 110 are not limited to being set to be stacked in the thickness direction of the current collection plate 100. Alternatively, the current collection plate 100 may be set to include a plate body 140, and portions the plate body 140 is protruding toward the electrode core 320, to form, on the plate body 140, the first joint portion 120 protruding toward the electrode core 320 and the second joint portion 110 protruding toward the cover plate 210. The electrical connection between the cover plate 210 and the electrode core 320 may also be implemented by using the current collection plate 100, thereby reducing the difficulty of connection between the cover plate 210 and the electrode core 320 and ensuring the quality of connection between the cover plate 210 and the electrode core 320.

In some embodiments, a thickness of the second joint portion 110 is greater than a thickness of the first joint portion 120. It means that, when both the second joint portion 110 and the first joint portion 120 are formed on the plate body 140, the thickness of the second joint portion 110 is greater than the thickness of the first joint portion 120, so that the thickness of the second joint portion 110 is larger, thereby making the thickness of the main body of the current collection plate 100 larger. This facilitates direct formation of the second j oint portion 110 and the first joint portion 120 on the current collection plate 100, avoids breakage of the current collection plate 100 in a forming process, and can further avoid affecting the electrode core 320 when the second joint portion 110 is welded to the cover plate 210, to extend the service life of the electrode core 320.

In addition, setting the thickness of the second joint portion 110 to be greater than the thickness of the first joint portion 120 is also conducive to setting the thickness of the first joint portion 120 to be small, thereby making it convenient to weld the first joint portion 120 to the electrode core 320 and increasing the welding yield.

In some embodiments, as shown in FIG. 2, a thickness L1 of the first joint portion 120 ranges from 0.1 mm to 0.8 mm. When the thickness of the first joint portion 120 is less than 0.1 mm, the structural strength of the first joint portion 120 is reduced. As a result, the current collection plate 100 is prone to break, and the service life of the current collection plate 100 is shortened. When the thickness of the first joint portion 120 is greater than 0.8 mm, the difficulty of welding the first joint portion 120 to the electrode core 320 increases.

Therefore, in the present disclosure, the thickness L1 of the first joint portion 120 is set to range from 0.1 mm to 0.8 mm, which can facilitate welding between the first joint portion 120 and the electrode core 320 and increase a welding yield while avoiding breakage of the current collection plate 100.

In a specific example, the thickness of the first joint portion 120 is 0.1 mm, 0.2 mm, 0.3 mm, 0.4 mm, 0.5 mm, 0.6 mm, 0.7 mm, 0.8 mm, or the like.

Optionally, as shown in FIG. 2, a thickness of the plate body 140 excluding the first joint portion 120 is L2, where 0 mm < L2-L1 < 0.5 mm. In other words, the thickness of the second joint portion 110 is greater than the thickness of the first joint portion 120, and a difference between the thickness of the second joint portion 110 and the thickness of the first joint portion 120 is less than 0.5 mm. In this way, the thickness of the first joint portion 120 is prevented from being larger, thereby avoiding a case that a partial structure of the plate body 140 cannot effectively protrude toward the electrode core 320 to form the first joint portion 120 and reducing the difficulty of forming the current collection plate 100, and can further reduce the weight of the current collection plate 100 and reduce the production costs of the current collection plate 100.

In a specific example, the thickness of the plate body 140 excluding the first joint portion 120 is 0.1 mm, 0.2 mm, 0.3 mm, 0.4 mm, 0.5 mm, or the like.

The following describes a cover plate assembly 200 for a battery cell 1000 according to an embodiment of the present disclosure with reference to the accompanying drawings of the specification.

With reference to FIG. 3 to FIG. 6, a cover plate assembly 200 for a battery cell 1000 according to an embodiment of the present disclosure includes: a cover plate 210 and a current collection plate 100.

The cover plate 210 includes a current lead-out terminal. The current lead-out terminal described herein may be the terminal 250, or may be the cover plate 210 itself.

With reference to FIG. 3 to FIG. 6, the current collection plate 100 is the foregoing current collection plate 100. Details of a specific structure of the current collection plate 100 are not described herein again, and the current collection plate 100 is connected to the current lead-out terminal. Therefore, electrical connection between the current collection plate 100 and the cover plate 210 is implemented, to lead out the current of the electrode core 320 conveniently.

In some embodiments, the second joint portion 110 of the current collection plate 100 is connected to the current lead-out terminal. When the current collection plate 100 is electrically connected to the cover plate 210, the difficulty of electrically connecting the current collection plate 100 to the cover plate 210 can be further reduced.

It can be learned from the foregoing structure that according to the cover plate assembly 200 in this embodiment of the present disclosure, by using the foregoing current collection plate 100, a connection area between the cover plate 210 and the electrode core 320 can be increased, connection strength can be improved, and connection impedance can be reduced, to improve working performance of the battery cell 1000.

In some embodiments, as shown in FIG. 3, FIG. 5, and FIG. 6, the cover plate 210 is provided with an electrolyte solution filling hole 211, and the first j oint portion 120 further includes an avoidance opening 123 for avoiding the electrolyte solution filling hole 211. The electrolyte solution filling hole 211 is provided on the cover plate 210, so that the electrode core 320 can be easily filled with electrolyte solution through the electrolyte solution filling hole 211, to ensure the working performance of the electrode core 320. By providing the avoidance opening 123 for avoiding the electrolyte solution filling hole 211 on the first joint portion 120, a case that the first joint portion 120 hinders the electrolyte solution filling of the electrolyte solution filling hole 211 can be avoided, thereby ensuring that an electrolyte solution flowing through the electrolyte solution filling hole 211 can effectively flow to the electrode core 320, to ensure an electrolyte solution filling effect.

Therefore, the foregoing may also be understood as follows: By providing the avoidance opening 123 for avoiding the electrolyte solution filling hole 211 on the first joint portion 120, an electrolyte solution filling space can be expanded, the electrolyte solution is prevented from bouncing and spilling during electrolyte solution filling, and the electrolyte solution filling efficiency is improved.

It is worth noting that, based on the structural form of the current collection plate 100 in the present disclosure and to avoid cutting a hole on the pole 250, the electrolyte solution filling hole 211 is off-center designed in the present disclosure. However, after the electrolyte solution filling hole is off-center designed, there is still a phenomenon that the current collection plate 100 hinders the electrolyte solution filling of the electrolyte solution filling hole 211. Therefore, the avoidance opening 123 for avoiding the electrolyte solution filling hole 211 is provided on the first joint portion 120 in the present disclosure, to ensure the electrolyte solution filling effect, thereby improving the electrolyte solution filling efficiency.

In some embodiments, as shown in FIG. 5 and FIG. 6, a boss 240 surrounding an outer periphery of the electrolyte solution filling hole 211 is arranged on a side of the cover plate 210. The boss 240 can guide the electrolyte solution flowing out through the electrolyte solution filling hole 211 to flow toward the electrode core 320, to further improve the electrolyte solution filling effect.

In some embodiments, a minimum spacing between the avoidance opening 123 and the electrolyte solution filling hole 211 is in a value range of 0 mm to 10 mm. In this way, while interference between the current collection plate 100 and the electrolyte solution filling hole 211 is avoided, the area of the current collection plate 100 can be further ensured, thereby ensuring the welding area between the current collection plate 100 and the electrode core 320, and improving the welding effect.

It should be noted that as shown in FIG. 5 and FIG. 6, when the boss 240 is arranged at the outer periphery of the electrolyte solution filling hole 211, the foregoing minimum spacing between the avoidance opening 123 and the electrolyte solution filling hole 211 may be understood as a minimum spacing between the avoidance opening 123 and the boss 240, namely, T3 shown in FIG. 6. In this way, while the current collection plate 100 is prevented from blocking the electrolyte solution filling hole 211, the current collection plate 100 can be further prevented from interfering with the boss 240, thereby reducing welding thermal deformation of the connection region 121.

In a specific example, the minimum spacing between the avoidance opening 123 and the electrolyte solution filling hole 211 is 1 mm, 3 mm, 5 mm, 10 mm, or the like.

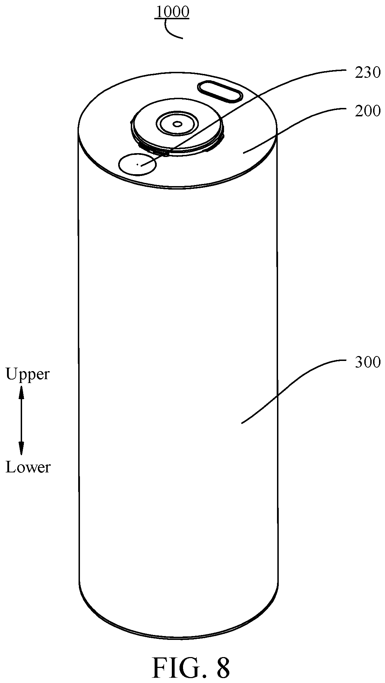

In some embodiments, with reference to FIG. 3, FIG. 8, and FIG. 9, the electrolyte solution filling hole 211 is formed into an electrolyte solution filling channel. The electrolyte solution filling channel has an entrance and an exit. The cover plate assembly 200 further includes a sealing screw 220 and a sealing cover 230. The sealing screw 220 is molded by injection molding, and the sealing cover 230 is formed by stamping. After the electrolyte solution filling of the electrolyte solution filling hole 211 is completed, the exit of the electrolyte solution filling hole 211 is first blocked by using the sealing screw 220, and then the sealing cover 230 is welded to the entrance of the electrolyte solution filling hole 211 through laser, to seal the electrolyte solution filling hole 211.

In addition, by blocking the exit of the electrolyte solution filling hole 211 through the sealing screw 220, welding slag can be further prevented from falling into the electrode core 320 in the process of welding the sealing cover 230, thereby avoiding the risk of short-circuit of the electrode core 320.

In some embodiments, the cover plate assembly 200 includes a positive cover plate assembly and a negative cover plate assembly. The positive cover plate assembly includes a positive current collection plate, and the negative cover plate assembly includes a negative current collection plate. The positive current collection plate and the negative current collection plate are each provided with an avoidance opening 123. The positive cover plate assembly and the negative cover plate assembly are each provided with an electrolyte solution filling hole 211 and a boss 240. In this way, the positive cover plate assembly and the negative cover plate assembly can have consistent structures, and therefore are machined conveniently by using a uniform mold, to reduce the difficulty of forming the cover plate assembly 200.

The following describes a battery cell 1000 according to an embodiment of the present disclosure with reference to the accompanying drawings of the specification.

with reference to FIG. 7, FIG. 8, and FIG. 9, a battery cell 1000 according to an embodiment of the present disclosure includes: a housing 300, an electrode core 320, and a cover plate assembly 200.

As shown in FIG. 9, an accommodating cavity 310 with an opening 311 is formed in the housing 300.

As shown in FIG. 9, the electrode core 320 is provided with a tab, and the electrode core 320 is arranged in the accommodating cavity 310. In this way, the electrode core 320 is arranged in the housing 300, which facilitates protection of the electrode core 320 by using the housing 300, extends the service life of the electrode core 320, and improves the use safety of the electrode core 320.

As shown in FIG. 9, the cover plate assembly 200 is the foregoing cover plate assembly 200. Details of a specific structure of the cover plate assembly 200 are not described herein. The cover plate 210 is arranged at the opening 311, the current collection plate 100 is arranged between the tab and the cover plate 210, and the current collection plate 100 is electrically connected to the tab and the cover plate 210 separately. Therefore, the electrical connection between the tab and the cover plate 210 is implemented, that is, the electrical connection between the electrode core 320 and the cover plate 210 is implemented, to ensure the working performance of the battery cell 1000.

In some embodiments, the second joint portion 110 of the current collection plate 100 is connected to the cover plate 210, and the first joint portion 120 of the current collection plate 100 is electrically connected to the tab. In this way, while the current collection plate 100 is electrically connected to the tab and the cover plate 210, the difficulty of electrically connecting the current collection plate 100 to the tab and the cover plate 210 can be further reduced, and the quality of electrically connecting the current collection plate 100 to the tab and the cover plate 210 is ensured.

The electrical connection described herein between the current collection plate 100 and the cover plate 210 may be understood as the electrical connection between the current collection plate 100 and the current lead-out terminal.

It can be learned from the foregoing structure that according to the battery cell 1000 in this embodiment of the present disclosure, by using the foregoing cover plate assembly 200, electrical connection between the cover plate 210 and the electrode core 320 is implemented by using the foregoing current collection plate 100, to increase the connection area between the cover plate 210 and the electrode core 320, thereby improving the connection strength between the cover plate 210 and the electrode core 320, reducing the connection impedance, and improving the working performance of the battery cell 1000.

In some embodiments, the housing 300 is formed by stamping or welding, and a material of the housing 300 is an aluminum material, a steel material, or another material.

In some embodiments, the connection region 121 is welded to the tab, and a welding line 1212 is provided at the connection region 121 (for a specific structure of the welding line 1212, reference may be made to FIG. 1 and FIG. 2). It may also be understood herein that, after the connection region 121 is welded to the tab, the welding line 1212 is formed at the connection region 121. The welding connection can further ensure connection strength between the connection region 121 and the tab while implementing electrical connection between the connection region 121 and the tab, so that relative positions of the connection region 121 and the tab are stable, thereby ensuring the working performance of the battery cell 1000.

In some embodiments, the connection region 121 and the tab are welded and connected to each other through pulse spot welding.

When the connection region 121 and the tab are welded and connected to each other through pulse spot welding, as shown in FIG. 1 and FIG. 2, the welding line 1212 includes a plurality of welding spots 1213, and the plurality of welding spots 1213 collaborate to implement fixed connection between the connection region 121 and the tab.

In some other embodiments, the connection region 121 and the tab are welded to each other by using a laser line. When the connection region 121 and the tab are welded to each other by using a laser line, the welding line 1212 is formed into a welding wire (not shown in the figure).

In some embodiments, with reference to FIG. 1 and FIG. 2, in a width direction of the connection region 121, a plurality of rows of welding lines 1212 are provided in the connection region 121, each row of welding line 1212 includes a plurality of welding spots 1213, and welding spots 1213 in adjacent rows are arranged alternately. A plurality of rows of welding lines 1212 are provided in the connection region 121 to increase the connection area between the connection region 121 and the electrode core 320, thereby improving the connection strength between the connection region 121 and the electrode core 320, and ensuring the connection effect between the connection region 121 and the electrode core 320. By arranging the welding spots 1213 in adjacent rows alternately, in one aspect, interference between the welding spots 1213 in adjacent rows can be avoided, thereby reducing thermal impact between the welding spots 1213 and improving the welding yield, and the plurality of welding spots 1213 can be further distributed more evenly, thereby making the impedance lower; and in the other aspect, it can be ensured that the plurality of welding spots 1213 in adjacent rows collaborate to enable each layer of electrode plate of the electrode core 320 to be electrically connected to the current collection plate 100, thereby ensuring the quality of connection between the electrode core 320 and the current collection plate 100.

It should be noted that The foregoing arranging the welding spots 1213 in adjacent rows alternately may also be understood as that, in two adjacent rows of welding lines 1212, in a width direction of the connection region 121, a welding spot 1213 in one row of welding line 1212 directly faces a position between two welding spots 1213 in the other row of welding line 1212, thereby preventing the welding spots 1213 in adjacent rows from interfering with each other in a welding process, reducing thermal impact between the welding spots 1213, and improving a welding yield, and it can be further ensured that each layer of electrode plate in a radial direction of the electrode core 320 can be electrically connected to the current collection plate 100.

Certainly, in some other embodiments, on the premise that the width of the connection region 121 is large enough, in the width direction of the connection region 121, the welding spots 1213 in adjacent rows may alternatively be arranged directly oppositely.

It should be noted that When the welding spots 1213 in adjacent rows are arranged directly oppositely, in the radial direction of the electrode core 320, welding spots 1213 on at least one row of welding line 1212 and the electrode plates of the electrode core 320 are consistent in quantity and are in a one-to-one correspondence, thereby ensuring that each layer of electrode plate in the radial direction of the electrode core 320 can be electrically connected to the current collection plate 100, ensuring the quality of connection between the electrode core 320 and the current collection plate 100, and helping improve the working performance of the electrode core 320.

In some embodiments, with reference to FIG. 1 and FIG. 2, a quantity of welding lines 1212 close to an edge of the current collection plate 100 is greater than a quantity of welding lines 1212 close to a geometric center of the current collection plate 100. In other words, the welding lines 1212 close to the edge of the current collection plate 100 are more than the welding lines 1212 close to the geometric center of the current collection plate 100, thereby effectively ensuring the connection area between the connection region 121 and the outer electrode plate of the electrode core 320, improving the connection strength between the current collection plate 100 and the electrode core 320, and reducing the connection impedance.

It should be noted that as shown in each of FIG. 1 and FIG. 2, description is made using an example in which the quantity of welding lines 1212 close to the edge of the current collection plate 100 is three rows and the quantity of welding lines 1212 close to the geometric center of the current collection plate 100 is two rows. However, in some other embodiments, alternatively, the quantity of welding lines 1212 close to the edge of the current collection plate 100 may be set to four rows and the quantity of welding lines 1212 close to the geometric center of the current collection plate 100 may be set to three rows; or the quantity of welding lines 1212 close to the edge of the current collection plate 100 may be set to four rows and the quantity of welding lines 1212 close to the geometric center of the current collection plate 100 may be set to two rows. This is not specifically limited herein as long as it is ensured that the quantity of welding lines 1212 close to the edge of the current collection plate 100 is greater than the quantity of welding lines 1212 close to the geometric center of the current collection plate 100.

In some embodiments, with reference to FIG. 7, FIG. 8, and FIG. 9, the battery cell 1000 is a cylindrical cell. Therefore, the battery cell 1000 has advantages such as a high capacity, a long cycle life, and a wide temperature range in a usage environment, thereby ensuring the working performance of the battery cell 1000.

A battery assembly according to an embodiment of the present disclosure is described below.

A battery assembly according to an embodiment of the present disclosure includes a plurality of battery cells 1000.

The battery cell 1000 is the foregoing battery cell 1000. Details of a specific structure of the battery cell 1000 are not described herein.

It can be learned from the foregoing structure that according to the battery assembly in this embodiment of the present disclosure, by using the foregoing battery cell 1000, working performance of the battery assembly is improved.

It should be noted that the battery assembly described herein may be a battery pack or a battery module.

A power-consuming device according to an embodiment of the present disclosure is described below.

A power-consuming device according to an embodiment of the present disclosure includes a battery assembly.

The battery assembly is the foregoing battery assembly. Details of a specific structure of the battery assembly are not described herein.

It can be learned from the foregoing structure that according to the power-consuming device according to this embodiment of the present disclosure, by using the foregoing battery assembly, working performance of the power-consuming device is improved.

It should be noted that the power-consuming device described herein may be, but is not limited to, a mobile phone, a tablet, a notebook computer, an electric toy, a power tool, an electric bicycle, an electric vehicle, a ship, a space vehicle, or the like.

The electric toy may include a fixed or mobile electric toy, for example, a game console, an electric vehicle toy, an electric ship toy, and an electric aircraft toy. The space vehicle may include an aircraft, a rocket, a space shuttle, a spaceship, and the like. The power tool includes a metal cutting power tool, a grinding power tool, an assembly power tool, and a railway power tool, for example, an electric drill, an electric grinder, an electric wrench, an electric screwdriver, an electric hammer, an electric impact drill, a concrete vibrator, and an electric planer.

In the descriptions of the present disclosure, it should be noted that, unless otherwise clearly specified and defined, terms such as "mounting", "interconnection", and "connection" shall be understood in a broad sense, for example, may be a fixing connection, a detachable connection, an integral connection, a mechanical connection, an electrical connection, a direct connection, an indirect connection by using an intermediate medium, and communication between interiors of two components. Persons of ordinary skill in the art may understand the specific meanings of the foregoing terms in the present disclosure according to specific situations.

Two connection regions 121 are shown in each of FIG. 1 and FIG. 2 for the purpose of exemplary description. However, after reading the foregoing technical solution, a person of ordinary skill can clearly understand that application of the solution to a technical solution of three or more connection regions 121 also falls within the protection scope of the present disclosure.

Specific structures of other components, for example, the electrode core 320 of the current collection plate 100, the cover plate assembly 200, the battery cell 1000, the battery assembly, and the power-consuming device according to the embodiments of the present disclosure are all known to a person of ordinary skill in the art, and are not described herein in detail.

In description of this specification, description of reference terms such as "an embodiment" or "an example", means including specific features, structures, materials, or features described in the embodiment or example in at least one embodiment or example of the present disclosure. In this specification, schematic descriptions of the foregoing terms are not necessarily directed at a same embodiment or example. Moreover, the specific features, structures, materials, or characteristics described may be combined in any one or more embodiments or examples in an appropriate manner.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A current collection plate, comprising: a first joint portion, the first joint portion comprising a connection region adapted to be electrically connected to an electrode core, and a width of the connection region increasing from inside to outside in a direction away from a geometric center of the current collection plate.

2. The current collection plate according to claim 1, wherein the connection region has a maximum width close to an edge of the current collection plate and a minimum width close to the geometric center of the current collection plate, and a difference between the minimum width and the maximum width is in a value range of 2 mm to 6 mm.

3. The current collection plate according to claim 2, wherein the minimum width is in a value range of 1 mm to 10 mm.

4. The current collection plate according to claim 1, wherein the first joint portion comprises a plurality of connection regions, and the plurality of connection regions are arranged at intervals in a circumferential direction of the current collection plate,
preferably wherein two connection regions are provided and are arranged symmetrically relative to the geometric center of the current collection plate, and .
more preferably wherein a part of the current collection plate is bent to define the connection region.

5. The current collection plate according to any one of claims 1 to 4, further comprising a second joint portion and an intermediate piece, the second joint portion being adapted to be electrically connected to a cover plate, two ends of the intermediate piece being connected to the first joint portion and the second joint portion respectively, and in a thickness direction of the current collection plate, the first joint portion, the intermediate piece, and the second joint portion being stacked.

6. The current collection plate according to claim 5, wherein the first joint portion further comprises an identification region, and the identification region is arranged close to a junction of the intermediate piece and the first joint portion.

7. The current collection plate according to claim 6, wherein in a first direction, a connection line between junctions of opposite side walls of the intermediate piece and the first joint portion is a first connection line, and a minimum distance between the identification region and the first connection line is in a value range of -2 mm to +2 mm;
and/or, in the first direction, a maximum width of the identification region is D3, and a minimum width of the intermediate piece is D4, wherein 0.2 < D3/D4 < 1.

8. The current collection plate according to claim 6, wherein the identification region is a through hole penetrating the first j oint portion or a groove provided in the first j oint portion.

9. The current collection plate according to any one of claims 1 to 4, comprising a plate body, portions the plate body protruding toward the electrode core to form, on the plate body, the first joint portion protruding toward the electrode core and the second joint portion protruding toward a cover plate, preferably wherein a thickness of the second joint portion is greater than a thickness of the first joint portion; or
wherein a thickness of the first joint portion is L1, and a thickness of the plate body excluding the first joint portion is L2, wherein 0 mm < L2-L1 < 0.5 mm.

10. A cover plate assembly for a battery cell, comprising:
a cover plate, the cover plate comprising a current lead-out terminal; and
a current collection plate, the current collection plate being the current collection plate according to any one of claims 1 to 9, and the current collection plate being connected to the current lead-out terminal,
preferably wherein the cover plate is provided with an electrolyte solution filling hole, and the first joint portion further comprises an avoidance opening for avoiding the electrolyte solution filling hole, and
more preferably wherein a minimum spacing between the avoidance opening and the electrolyte solution filling hole is in a value range of 0 mm to 10 mm.

11. A battery cell, comprising:
a housing, an accommodating cavity with an opening being formed in the housing;
an electrode core, the electrode core being provided with a tab, and the electrode core being arranged in the accommodating cavity; and
a cover plate assembly, the cover plate assembly being the cover plate assembly according to claim 10, the cover plate being arranged at the opening, the current collection plate being arranged between the tab and the cover plate, and the current collection plate being electrically connected to the tab and the cover plate separately.

12. The battery cell according to claim 11, wherein the connection region is welded to the tab, and a welding line is provided at the connection region,
preferably wherein in a width direction of the connection region, a plurality of rows of welding lines are provided in the connection region, each row of welding line comprises a plurality of welding spots, and welding spots in adjacent rows are arranged alternately, and
more preferably wherein a quantity of welding lines close to an edge of the current collection plate is greater than a quantity of welding lines close to a geometric center of the current collection plate.

13. The battery cell according to any one of claims 11 to 12, the battery cell being a cylindrical cell.

14. A battery assembly, comprising a plurality of battery cells according to any one of claims 11 to 13.

15. A power-consuming device, comprising the battery assembly according to claim 14.
